# EUROPEAN PATENT SPECIFICATION

(11) **EP 3 330 069 B1**
(45) Date of publication and mention of the grant of the patent: **01.07.2020**
(21) Application number: 17205039.5
(22) Date of filing: 01.12.2017
(51) Int. Cl.: B31B 70/81, B31B 70/64, B31B 70/36, B31B 150/20, B31B 155/00, B31B 160/10, B31B 70/26, B29L 31/00, B29C 65/18, B29C 65/30, B29C 65/74, B29C 65/78, B65D 81/03, B65D 81/38, B29C 65/00

(54) **A MACHINE AND A METHOD FOR PRODUCING A PROTECTIVE BAG**
MASCHINE UND VERFAHREN ZUR HERSTELLUNG EINES SCHUTZBEUTELS
MACHINE ET PROCÉDÉ DE PRODUCTION D'UN SAC DE PROTECTION

(30) Priority: 02.12.2016 IT 201600122901
(43) Date of publication of application: 06.06.2018
(73) Proprietor: MS S.R.L., 31037 Loria (TV) (IT)
(72) Inventor: MARCADELLA, Enrico, 36020 Pove Del Grappa (VI) (IT)
(74) Representative: Gallo, Luca

(56) References cited:
- WO-A1-2010/092404
- WO-A1-2015/076635
- US-A- 6 139 188
- US-A1- 2004 091 179
- US-A1- 2005 050 852
- US-A1- 2012 289 389

## Description

### Field of application

The invention relates to a method for producing a protective bag and a machine for producing a protective bag, according to the preamble of the respective independent claims.

The method and the machine in question are designed, advantageously, to be used in the industrial sector for the production of protective bags, in particular made of plastic material.

The protective bag is designed, advantageously, to be used in the industrial field of packing and packaging, in particular protective packaging for the transport of objects of any shape and size.

### State-of-the-art

As is known, protective bags made of plastic material have been on the market for years, designed to contain objects to be carried, for example, for consignments by post, or for consignments by means of transport services, such as, for example, freight trains, or designed to protect valuable and/or fragile objects designed to be placed by users inside their cases during a plane journey. In such scope, the need has long been felt for protective bags for the private transport of glass bottles (or nonetheless made of breakable material) containing a liquid, such as, for example, wine, during plane journeys. As is known, in fact, liquid substances and their containers are not allowed in the passenger cabin of scheduled airliners and therefore, they must be kept in the hold of the plane, inside a case. Protective bags, described in brief below, are known for protecting bottles designed to be kept in the hold of the plane during the journey.

Protective bags are normally provided with two rectangular shaped main portions, counterfacing each other and joined by heat sealing in correspondence with three of the four perimeter edges. Consequently, each protective bag is provided with an access opening delimited by the two unjoined perimeter edges of the two main rectangular portions.

Traditionally, the main portions of protective bags are made of a padded plastic material, for example pluriball (called bubble wrap) provided with a plurality of bubbles, which act as cushions for cushioning knocks, which the object contained in the protective bag, for example, a glass bottle, may be subjected to during transport.

Protective bags made of expanded polyethylene (for example, foam, i.e. polyethylene foam) are also known on the market, composed of an expanded plastic material, which presents a plurality of bubbles normally containing air. Such bubbles have a random, non-predefined arrangement inside the plastic material composing the protective bags and are present throughout the whole thickness of such plastic material, each in contact with all of the other bubbles, perimetrically adjacent. Such bubbles each act as cushion and compress the perimetrically adjacent bubbles in the event of knocks, cushioning such knocks, which the object contained inside the bag may be subjected to during transport.

The aforesaid bags are normally sealed by means of an adhesive strip.

In practice, such protective bags of the known type have proven not to be without their drawbacks. The main drawback lies in the fact that the sealing of the bag requires the application of an adhesive strip, which is an external element that requires the work of an operator, increasing the time needed and costs of each packaging.

A further drawback lies in the fact that the protective bag of the type known described thus far does not guarantee optimum sealing in correspondence with its access opening, since such sealing depends on the quantity of adhesive strip used and on the skill of the operator.

In order to overcome some of the drawbacks of the bag of the type known described, in brief, thus far, a protective bag is known from US patent 2016/0229622 provided with a device for sealing the access opening by means of a strip of adhesive material arranged on one margin of the access opening. However, in practice, this last bag of the type known has also proven not to be without its drawbacks. The main drawback lies in the fact that on completion of the transport of the object to be carried, the opening of the protective bag needs to be broken since the glue is designed so as not to come off during transport. Therefore, the bag cannot be used again, increasing the production of waste and proving to be relatively non-environmentally friendly.

In the packaging industry, the need has long been felt to be able to seal and reseal protective bags provided with cushioning bubbles, as desired, and numerous attempts have been made to such end. In protective bags of the type know, the elevated thickness of the bubbles of the bubble wrap and the elevated heat capacity of the gas contained therein has not enabled sealing means to be combined effectively with the bubble wrap by means of heat sealing, normally known to an expert in the field, because the heat of the sealing bars, which implement the sealing, is partly absorbed by the air contained in the bubbles of the bubble wrap or the polyethylene foam.

A machine is known from patent application US 2005/0050852 for producing resealable plastic bags, which includes moving a ribbon-like sheet, folded longitudinally, until a first sealing station, wherein a hinge, provided with two leaf-like strips, is sealed to the corresponding longitudinal free edges of the ribbon-like sheet by means of sealing. Furthermore, the machine comprises a second sealing station adapted to slice the ribbon-like sheet transversely, by means of heat sealing, to divide the latter into several bags provided with the aforesaid hinge. A similar machine is known from patent application WO 2010/092404.

This latter machine of the type known and described above in brief is not adapted to produce protective bags made of bubble wrap or polyethylene foam.

Patent documents WO 2015/076635 and US 6,139,188 teach to produce protective bags by means of folding a sheet made of expanded material or bubble wrap, and thus joining together the two sides of overlapped panels of the folded sheet by means of heating treatments, so that to form a bag having two edges defining an opening of the bag. Then, a zipper is fixed on the two edges of the bag by soldering. The steps disclosed in these prior art documents are not optimized for an efficient and large-scale production of plastic bags made of expanded material or bubble wrap.

### Disclosure of the invention

In this situation, the problem underlying the present invention is to provide a method for producing a protective bag, which is quick, safe and financially sustainable.

It is a further scope of the present invention to provide a machine for producing a protective bag, which does not require significant variations to the traditional machines for producing a protective bag.

### Brief description of the drawings

The technical characteristics of the invention, according to the aforesaid objects, can clearly be seen from the content of the claims reported below and the advantages of the same will become clearer from the following detailed description, made with reference to the appended drawings, which represent various embodiments, illustrated purely by way of example, which are not limiting, wherein:
- figure 1A shows a schematic view of the machine for producing a protective bag constituting the object, according to a first embodiment of the invention;
- figure IB shows a schematic view of the machine constituting the object, according to a second embodiment of the invention;
- figure 2 shows a front view of a longitudinal sealing station of the machine constituting the object;
- figure 3 shows an exploded schematic perspective view of a detail of the longitudinal sealing station in figure 2;
- figure 4 shows an exploded schematic perspective view of a further detail of the longitudinal sealing station in figure 2;
- figure 5 shows a front view of a sealing and transverse cutting station of the machine constituting the object;
- figure 6 shows an exploded schematic perspective view of a detail of the sealing and transverse cutting station in figure 5;
- figure 7 shows an exploded schematic perspective view of a further detail of the sealing and transverse cutting station in figure 5;
- figure 8 shows a perspective view of a protective bag;
- figure 9 shows a perspective view of a detail of the protective bag in figure 8 relating to its sealing means.

### Detailed description of some preferred embodiments

With reference to the appended drawings, a machine for producing a protective bag 100 constituting the object of the present invention, has been globally indicated with 1.

The protective bag 100, which is not part of the claimed invention, is designed, advantageously, to contain objects to be protected during transport, for example, the transport of a bottle made of breakable material during a plane journey.

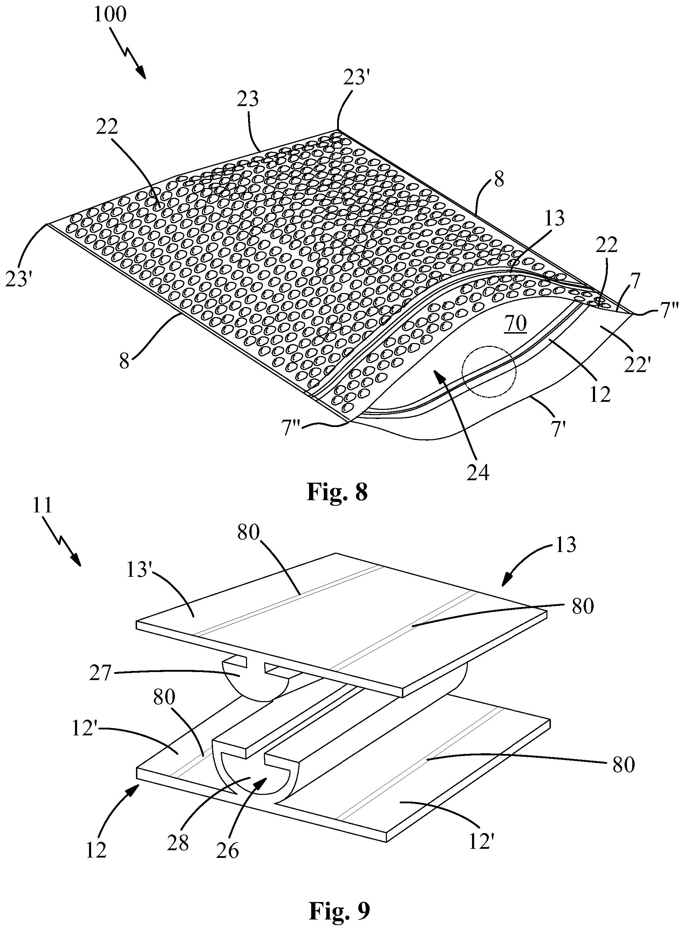

According to the embodiments illustrated in the appended figures 8 and 9, the protective bag 100 comprises two main congruent-shaped portions 22, 22' overlapping each other and joined to each other in a single body by means of a linear fold 23, delimiting a containing volume 70 between each other designed to contain an object to be protected.

Each main portion 22, 22' is provided with a corresponding free edge 7, 7' positioned opposite the linear fold 23, so that each main portion 22, 22' extends between the linear fold 23 and the corresponding free edge 7, 7'. The two free edges 7, 7' of the protective bag 100 substantially overlap each other and delimit an access opening 24, through which the object can be placed and taken from the containing volume 70.

The main portions 22, 22' are joined by two lateral sealing lines 8 between which the containing volume 70 extends.

Each lateral sealing strip 8 is connected to a lateral end 23' of the linear fold 23 and a common lateral end 7" of the free edges 7, 7'.

The main portions 22, 22' of the protective bag 100 preferably have a quadrangular shape (for example rectangular or square) in particular with the lateral sealing strips 8 parallel to each other.

The main portions 22, 22' of the protective bag 100 are made of bubble wrap or polyethylene foam, for example reticulated or non-reticulated foam.

The term bubble wrap shall subsequently be understood to mean any sheet of plastic material designed to be used for packaging an object, made of plastic material and provided with a plurality of cushioning bubbles, filled, for example with air or any other gas, according to the preferred embodiment, which is not limiting, illustrated in figure 8.

More specifically, the term bubble wrap shall be understood to mean both sheets of plastic material provided with a plurality of cushioning bubbles on the surface, arranged side by side, and double overlapping sheets of plastic material between which a plurality of air cushions is defined, which are delimited between each other by means of substantially grid sealing.

The term polyethylene foam shall subsequently be understood to mean a plastic material provided internally with a plurality of air bubbles of all sizes, set side by side and randomly inside the structure of the plastic material, creating a cushioning effect when stressed by a force external to the material, which contains them.

If the main portions 22, 22' of the protective bag 100 are made of bubble wrap, they preferably present a plurality of surface cushioning bubbles, each spaced apart from the others by a distance of 1 to 5 mm.

In particular, if the main portions 22, 22' are made of bubble wrap, they are provided with a plurality of surface cushioning bubbles each spaced apart from the others by a distance of 1 to 10 mm, for example by a distance of 2 to 5 mm.

Furthermore, the protective bag 100 comprises sealing means 11 fixed to the main portions 22, 22' by sealing in correspondence with the access opening 24. The sealing means 11 comprise a first strip 12 and a second strip 13 (made of plastic material) positioned counterfacing each other, which can be joined by male-female type shape coupling.

The first strip 12 and the second strip 13 of the sealing means 11 preferably extend in width in an interval of 7 to 20 mm.

Advantageously, the strips 12, 13 present a thickness of at least 1 mm.

Each strip 12, 13 is preferably fixed to the corresponding main portion 22, 22' by means of a corresponding longitudinal sealing strip 80, in particular in correspondence with the corresponding free edge 7, 7' parallel to the latter.

With reference to the example illustrated in figure 8 each strip 12, 13 is arranged spaced apart from the corresponding free edge 7, 7', for example by a few millimeters or by a few centimeters. Alternatively, each strip 12, 13 is arranged on the corresponding free edge 7, 7'.

According to the embodiment illustrated in figure 9, the strip 12 and the second strip 13 of the sealing means 11 are preferably made of plastic material and comprise a first coupling portion 26, for example female, preferably central, and a second coupling portion 27, for example male, preferably central, respectively, which coupling portions 26, 27 can be joined by means of male-female coupling. More specifically, the first coupling portion 26 (female) of the first strip 12 is provided with a longitudinal seat 28 whose shape is homologous to the second coupling portion 27 (male) of the second strip 13. Operationally, to seal the protective bag 100, a user compresses the main portions 22, 22' externally and forces the second male coupling portion 27 of the second strip 13 to enter the longitudinal seat 28 of the first female coupling portion 26 of the first strip 12.

To reopen the protective bag 100, the user holds the free edges 7, 7' defining the access opening 24 and forces them into a relative distancing movement from each other, consequently releasing the second male coupling portion 27 of the second strip 13 from the longitudinal seat 28 of the first female coupling portion 26 of the first strip 12.

Advantageously, in this way, the protective bag 100 is provided with sealing means 11 in correspondence with the access opening 24, which allow the same bag 100 to be closed and opened again quickly, without needing to break the plastic material, and consequently the protective bag 100 can be used again as desired.

Each strip 12, 13 preferably comprises two corresponding lateral wings 12', 13' made of plastic material, which extend from the corresponding coupling portion 26, 27 in an opposite direction to each other.

Advantageously, each strip 12, 13 is fixed to the corresponding main portion 22, 22' by double sealing.

Advantageously, each lateral wing 12', 13' is provided with a corresponding longitudinal sealing strip 80 by means of which it is fixed to the corresponding main portion 22, 22'.

The first strip 12 and the second strip 13 of the sealing means 11 are preferably each fixed to one of the two main portions 22, 22', respectively, by double heat-sealing.

In this way, the first strip 12 and the second strip 13 are each fixed by means of two longitudinal sealings, made laterally on the first coupling portion 26 of the first strip 12 and laterally on the second coupling portion 27 of the second strip 13.

A machine 1, which can be used for producing the aforesaid protective bag 100, constitutes the object of the present invention.

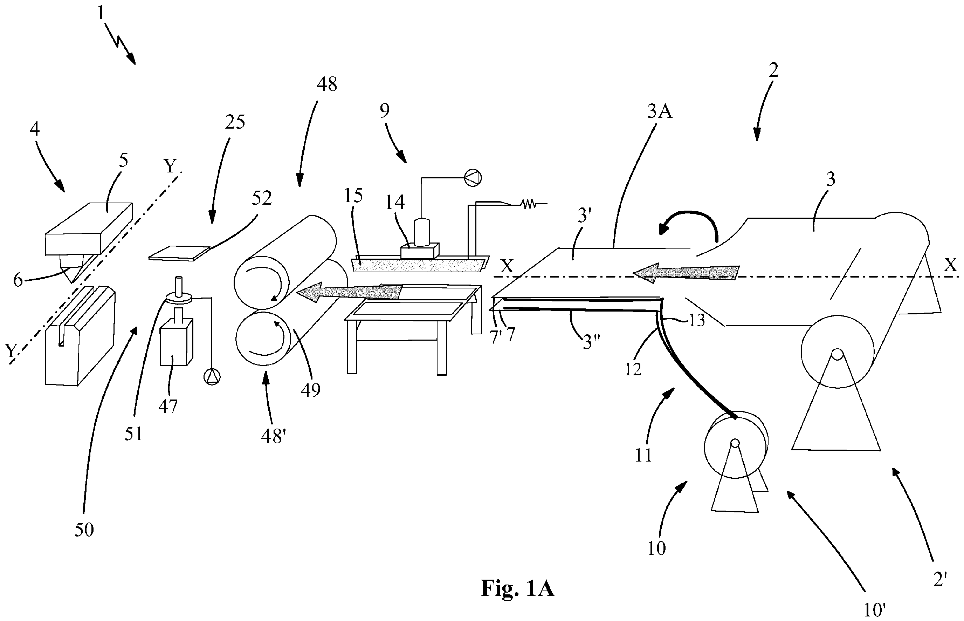

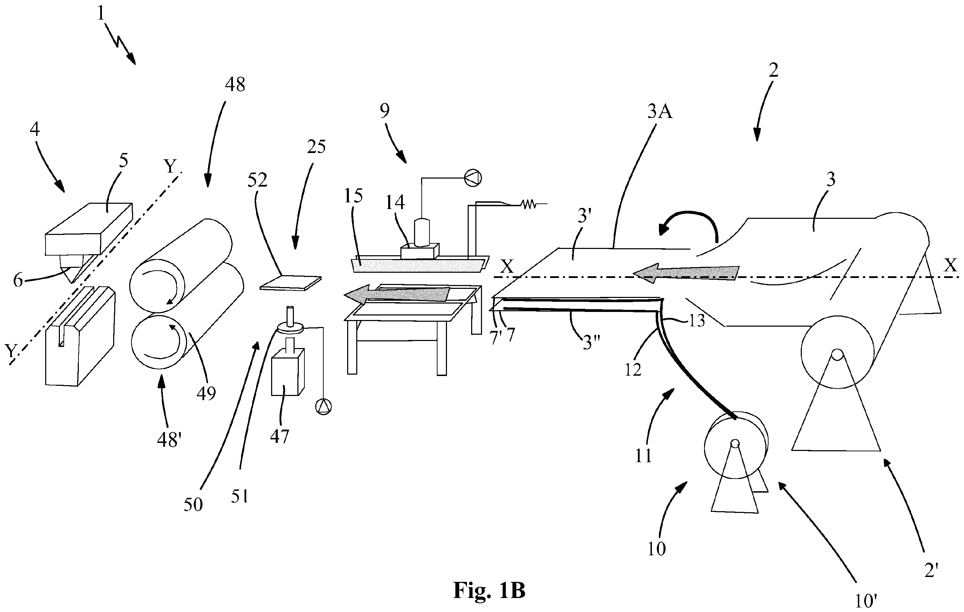

With reference to the embodiments illustrated in figures 1A and 1B, the machine 1 comprises a plurality of operating stations, each arranged in sequence to the previous one, in order to obtain a protective bag 100.

The machine 1 for producing a protective bag 100, according to the preferred embodiment illustrated in figure 1, comprises a preparing station 2 for a sheet of plastic material 3 (preferably ribbon-like) movable along a movement direction X and provided with at least one longitudinal fold 3A parallel to the movement direction X, which longitudinal fold 3A defines two overlapping strips 3', 3", each of which is provided with a free edge 7, 7' substantially counterfacing each other.

The preparing station 2 is preferably provided with a first rotating drum 2' on which the sheet of plastic material 3 can be wound, and from which the latter can be unwound for being moved along the movement direction X.

The machine 1 also comprises a sealing and transverse cutting station 4 provided with a first operative head 5 and a first sealing bar 6 fixed to the first operative head 5 positioned along a transverse direction Y substantially orthogonal with respect to the movement direction X of the sheet of plastic material 3.

The first operative head 5 bearing fixed thereto the first sealing bar 6 can be moved between a working position, wherein the first sealing bar 6 intercepts the sheet of plastic material 3, joins the two strips 3', 3" of the sheet of plastic material 3 by heat-sealing, forming a transverse sealing strip substantially aligned with the transverse direction Y, along which the first operative head 5 is positioned, and cuts the sheet of plastic material 3 along the same transverse sealing strip, and a rest position, wherein the first operative head 5 bearing fixed thereto the first sealing bar 6 is arranged in a distal position with respect to the sheet of plastic material 3.

The machine 1 also comprises a positioning station 10 interposed between the preparing station 2 and the sealing and transverse cutting station 4, which is adapted to position sealing means 11 in correspondence with the free edges 7, 7' of the strips 3', 3" of the sheet of plastic material 3 along the movement direction X of the latter.

The machine 1 also comprises a longitudinal sealing station 9 interposed between the positioning station 10 and the sealing and transverse cutting station 4, provided with a second operative head 14 and with at least one second sealing bar 15 substantially parallel to the movement direction X of the sheet of plastic material 3.

The second operative head 14 of the longitudinal sealing station 9 bears fixed thereto the second sealing bar 15, advantageously facing the sheet of plastic material 3, which can be moved between a sealing position, wherein the second sealing bar 15 intercepts the sheet of plastic material 3 in correspondence with its free edges 7, 7', in particular in correspondence with the sealing means 11, and joins the first strip 12 and the second strip 13 of the sealing means 11 by heat-sealing, each in correspondence with one of the free edges 7, 7' of the strips 3', 3" of the sheet of plastic material 3, and a separating position, wherein the second sealing bar 15 is arranged in a distal position with respect to the sheet of plastic material 3.

The sealing means 11 comprise a first strip 12 and a second strip 13 positioned counterfacing each other, which can be joined longitudinally by means of male-female type shape coupling.

In this way, once the sheet of plastic material 3 has been cut transversely along the transverse sealing lines, a plurality of protective bags 100 is obtained, each provided with an access opening 24 defined between the free edges 7, 7' of the strips 3', 3" of the sheet of plastic material 3.

The sheet of plastic material 3 is made of bubble wrap or polyethylene foam. Advantageously, if the sheet of plastic material 3 is made of bubble wrap, the latter is provided with a plurality of cushioning bubbles on the surface, each spaced apart from the others by a distance of 1 to 10 mm, in particular by a distance from 2 - 5 mm.

In this situation, in order to obtain optimum sealing of the sealing means 11, after numerous tests, it has surprisingly been discovered that the first strip 12 and the second strip 13 of the sealing means 11 join optimally to the bubble wrap, if they present a sufficient width for compressing the cushioning bubbles, at least in part, to form a uniform sealing.

The first strip 12 and the second strip 13 of the sealing means 11 preferably extend in width in an interval of 7 to 20 mm, in particular of 9 to 16 mm.

The longitudinal sealing station 9 of the machine 1 is preferably provided with at least two second sealing bars 15, 16, which are fixed to the second operative head 14 and substantially parallel to each other and to the movement direction X.

Advantageously, the second sealing bars 15, 16 can also be moved both between the aforesaid sealing position and the aforesaid separating position.

Advantageously, the second sealing bars 15, 16 are substantially aligned with the first strip 12 and the second strip 13 of the sealing means 11. In this way, when each of the second sealing bars 15, 16 is moved into the sealing position, it seals one of the lateral wings 12', 13' of the respective first and second strip 12, 13.

Advantageously, the first sealing bar 6 fixed to the first operative head 5 of the sealing and transverse cutting station 4 comprises a first supporting body 31 made of thermally conductive material and a first electrical resistance 29, in particular with a substantially cylindrical shape, inserted in a homologous first slot 30 made in the first supporting body 31, substantially parallel to the transverse direction Y.

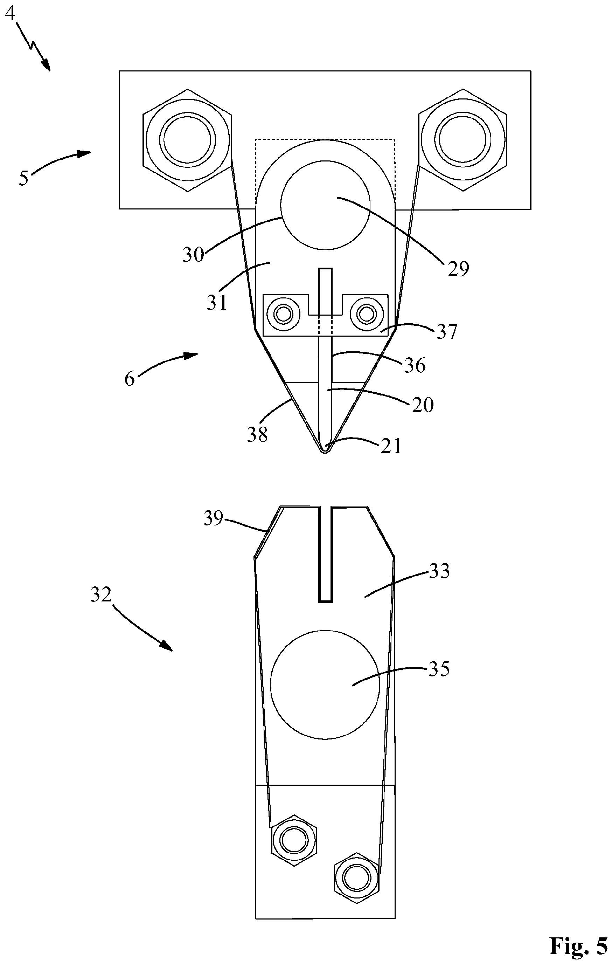

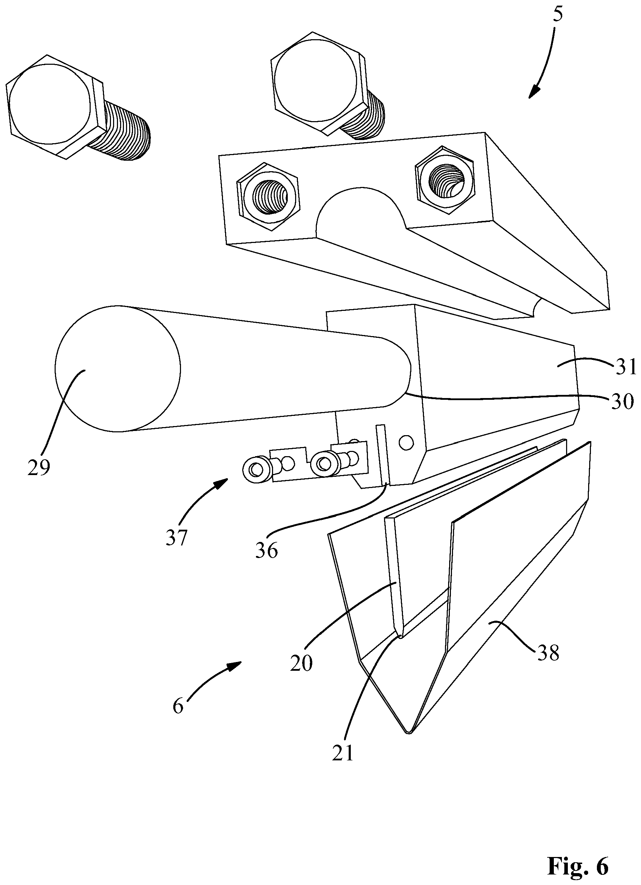

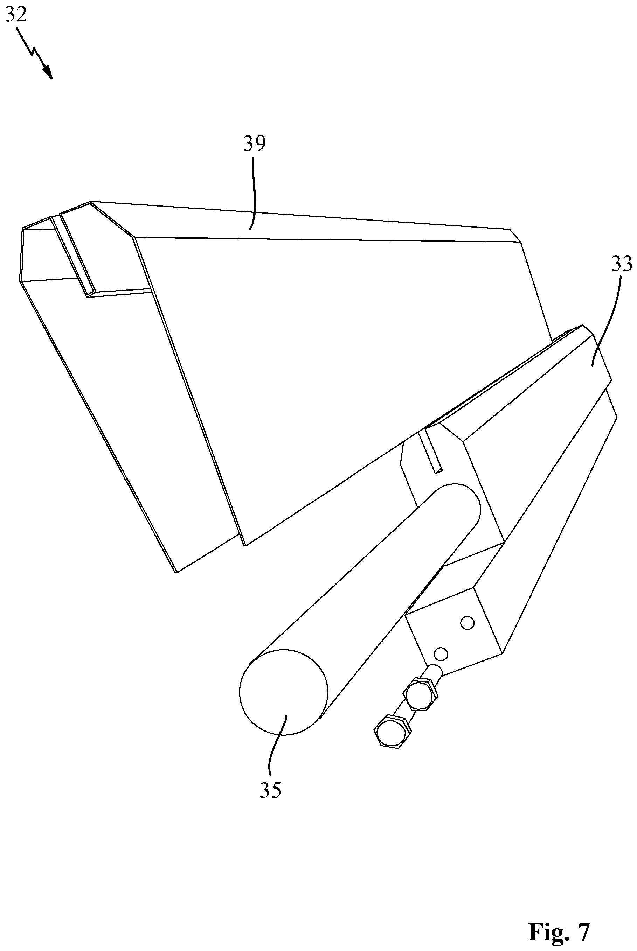

According to the preferred embodiment illustrated in the appended figures 5-7, the length of the first electrical resistance 29 is substantially equal to that of the first operative head 5, and it is connected to first electrical supply means, for example a magnetic core or electronic inverter transformer, adapted to supply a predetermined electric power to bring the first same electrical resistance 29 and the first supporting body 31 made of thermally conductive material to a predetermined temperature, by means of Ohmic effect heating, needed to form the lateral sealing strip 8 and cut the sheet of plastic material 3 along the same strip 8.

More specifically, the sealing and transverse cutting station 4 comprises an end stroke base 32, which can act as a lower guide for the movement of the sheet of plastic material 3 and receive, in abutment, the first sealing bar 6.

The end stroke base 32 is preferably provided with a second supporting body 33 made of thermally conductive material, in which a second seat 34 is made, substantially parallel to the transverse direction Y. A homologous second electrical resistance 35 is inserted in the second slot 34, supplied by the electrical supply means, in order to cause the first sealing bar 6 and the end stroke base 32 to reach the same temperature during the sealing and transverse cutting.

The first supporting body 31 of the first sealing bar 6 is preferably provided with a transverse groove 36, substantially parallel to the transverse direction Y facing the end stroke base 32, in which a blade 20 is housed made of thermally conductive material, for example copper or one of its alloys. Advantageously, such blade 20 inserted in the transverse groove 36 is held by retaining means 37, for example, a metal plate fixed to the first supporting body 31 by at least one screw.

According to the preferred embodiment of the present invention, illustrated in the appended figures, the first sealing bar 6 and the end stroke base 32 are provided with a first and a second conductive, non-stick plate 38, 39, respectively, positioned covering the first supporting body 31 and the second supporting body 33, respectively, and they are adapted to come into contact with the sheet of plastic material 3, without sticking to the latter during the sealing, in order to improve the reliability of the machine 1, which constitutes the object of the present invention.

In particular, the first and the second conductive non-stick plate 38, 39 are made of polytetrafluoroethylene (below PTFE).

The longitudinal sealing station 9 is preferably provided with at least one positioning rod 17, provided with a guiding mouth 18 substantially aligned with the movement direction X and adapted to guide the first strip 12 and the second strip 13 of the sealing means 11 into position in correspondence with the free edges 7, 7' of the strips 3', 3" of the sheet of plastic material 3.

More specifically, the first and the second strip 12, 13 of the sealing means 11 are wrapped around a second rotating drum 10' and inserted into the guiding mouth 18 of the positioning rod 17. During the movement of the sheet of plastic material 3 along the movement direction X, the latter pulls the first and the second strip 12, 13, which are held in a sliding position inside the guiding mouth 18 of the aforesaid positioning rod 17.

Advantageously, the second operative head 14 of the longitudinal sealing station 9 comprises a third electrical resistance 90, which can be heated by Ohmic effect by second electrical supply means, for example a magnetic core or electronic inverter transformer.

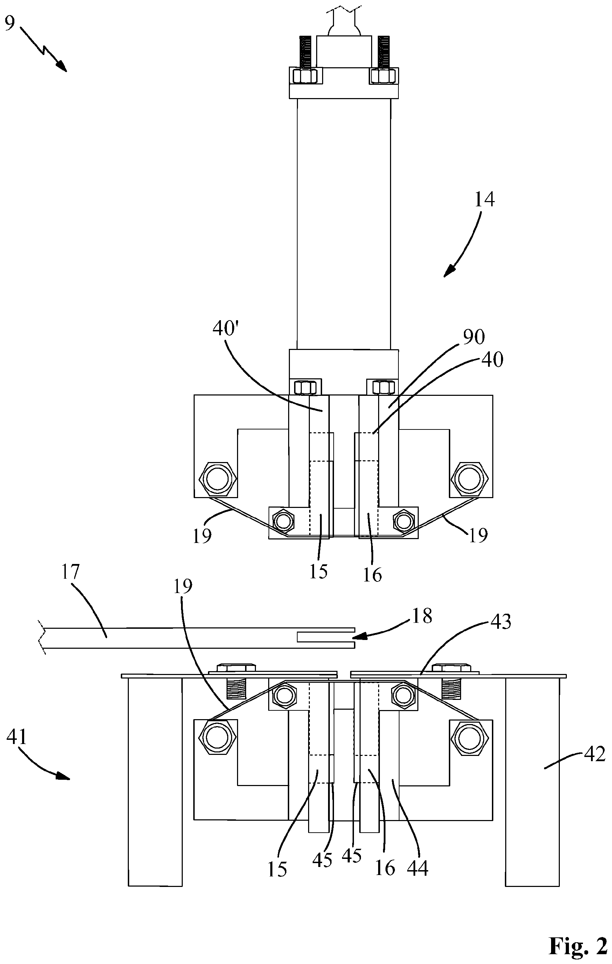

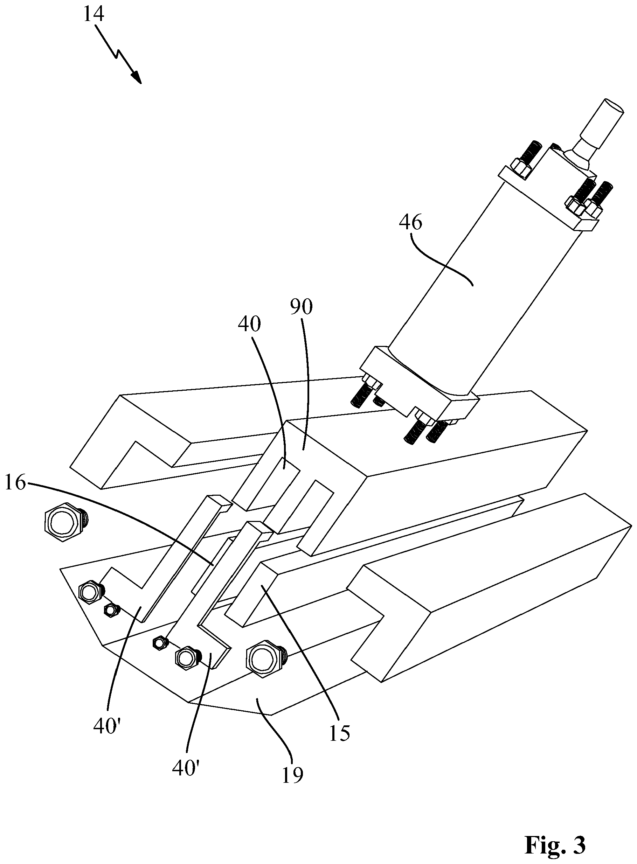

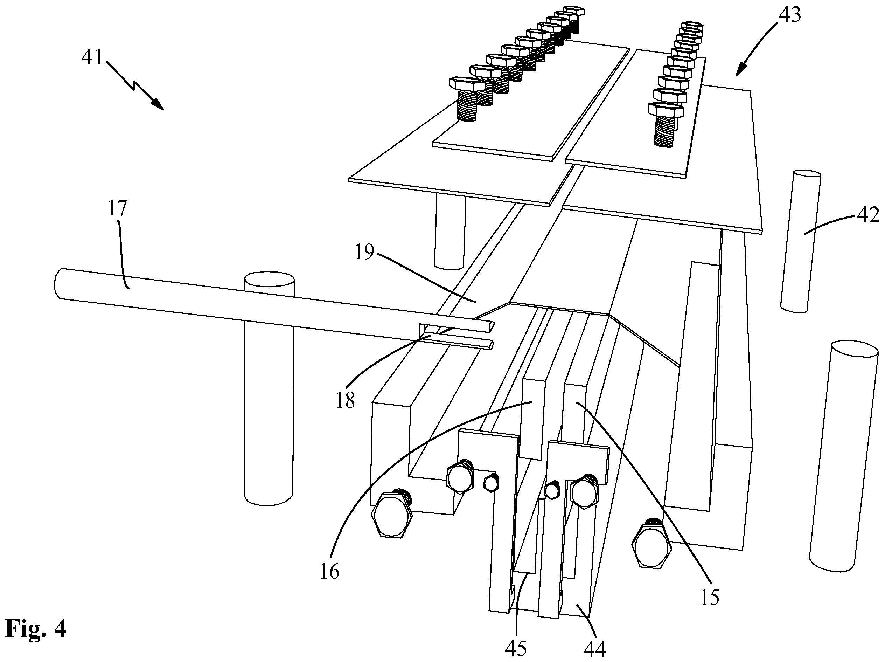

According to the preferred embodiment illustrated in the appended figures 2-4, the third electrical resistance 90 of the second operative head 14 of the longitudinal sealing station 9 is provided with at least a first transverse seat 40, substantially orthogonal with respect to the movement direction X of the sheet of plastic material 3, and parallel to the transverse direction Y, and it is provided, in particular, with two first transverse seats 40, parallel to each other, in which the at least one second sealing bar 15 is housed and in particular, two second sealing bars are housed 15, 16, with a shape homologous to that of the two transverse seats 40.

Advantageously, the second sealing bars 15, 16 are made of thermally conductive material and can be heated by thermal conduction, being positioned in thermal contact with the third electrical resistance 90.

The second sealing bars 15, 16 are preferably held in position inside the respective first transverse seats 40 by securing means 40', for example brackets adapted to support the weight of the second sealing bars 15, 16.

Advantageously, in order to achieve quick and easy sealing, the longitudinal sealing station 9 comprises a sealing base 41, which is substantially parallel to the at least one second sealing bar 15 of the second operative head 14 and it is adapted to receive, in abutment, the sheet of plastic material 3 when the second operative head 14 is moved into the sealing position and pushes such sheet of plastic material 3 against the sealing base 41.

More specifically, the sealing base 41 comprises a supporting structure 42 resting on the ground and an upper stop plate 43, which is contraposed against the second operative head 14 and can come into contact with the sheet of plastic material 3, when the second operative head 14 itself is moved into the sealing position, to act as a mechanical abutment during the longitudinal sealing of the sealing means 11.

The sealing base 41 of the longitudinal sealing station 9 preferably comprises a fourth electrical resistance 44, which can be heated by Ohmic effect, by the second electrical supply means, and it is provided with two second transverse seats 45, in which homologous second sealing bars 15, 16 are housed, which can be heated by thermal conduction by the fourth electrical resistance 44.

The upper stop plate 43 is preferably made of thermally conductive material and is arranged in thermal contact with the second sealing bars 15, 16 of the sealing base 41.

Operationally, when the second operative head 14 is moved into the sealing position, the sealing means 11 are heat sealed by the second sealing bars 15, 16 both from above and from below, and the first strip 12 and the second strip 13 are fixed inside the sheet of plastic material at the same time. Advantageously, the longitudinal sealing station 9 is also provided with at least one third non-stick, conductive plate 19 positioned to cover the at least one second sealing bar 15 (and in particular the two sealing bars 15, 16) and adapted to distribute the heat and prevent the sheet of plastic material from sticking to the second sealing bar 15.

Advantageously, the sealing station 9 comprises two third non-stick, conductive plates 19, each of which is made of PTFE and arranged covering the second sealing bars 15, 16 fixed to the second operative head 14 and the sealing base 41, respectively.

According to the preferred embodiment illustrated in the appended figures, the second operative head 14 comprises movement means 46, which comprise a hydraulic piston fixed to the third electrical resistance 90 bearing mounted thereto the two sealing bars 15, 16.

Operationally, the movement means 46 can move the second operative head 14 between the aforesaid sealing and separating positions with a reciprocating movement. More specifically, the movement means 46 are controlled by an electronic control unit (not illustrated in the appended figures), which is programmed so that, while the sheet of plastic material 3 is being moved along the movement direction X, the second sealing bars 15, 16 mounted onto the second operative head 14, intercept the sheet 3, forming a continuous sealing. Advantageously, the time in which the second operative head 14 is kept in the separating position is less, or equal to the time needed for the sheet of plastic material 3 to be moved by a length equal to that of the second sealing bars 15, 16. In this way, the sealing of the sealing means 11 is continuous and without discontinuity points.

According to the embodiments of the present invention illustrated in figure 1A and 1B, the machine 1 comprises a compression station 48 interposed between the longitudinal sealing station 9 and the sealing and longitudinal cutting station, provided with a compression device 48' designed to compress the strips 3', 3" of the folded sheet of plastic material 3 against each other, in order to reduce the thickness of the latter.

In particular, the compression device 48' comprises two counter-rotating rollers 49, each provided with a rotation axis, which is substantially parallel to the transverse direction Y, between which a light is defined.

Operationally, the sheet of plastic material 3 is moved along the movement direction X and forced to pass inside the light defined between the two counter-rotating rollers 49 of the compression station 48. In this way, the counter-rotating rollers 49 compress the sheet of plastic material 3 and press the two strips 3', 3" against each other, in order to reduce their thickness, to assist the sealing and transverse cutting station 4, and reduce the resistance encountered by the first sealing bar 6 to a minimum when it is moved into the working position together with the first operative head 5.

Advantageously, the machine 1 comprises an end pressing station 25, interposed between the longitudinal sealing station 9 and the sealing and transverse cutting station 4.

According to the first embodiment illustrated in figure 1A, the end pressing station 25 is arranged between the compression station 48 and the sealing and transverse cutting station 4. Alternatively, according to the second preferred embodiment, the compression station 48 is arranged downstream of the end pressing station 25, between the latter and the sealing and transverse cutting station 4. Advantageously, the end pressing station 25 is provided with an end pressing device 50, comprising a piston 51 made of metal material, which can be moved between a pressing position, in which it interferes with the sheet of plastic material 3 in correspondence with the sealing means 11, and a detachment position, in which it is arranged in a distal position with respect to the sheet of plastic material 3.

The end pressing device 50 also comprises a stop wall 52, which can receive, in abutment, the sheet of plastic material 3 pressed by the piston 51, when it is arranged in the pressing position, in order to reduce the thickness of the sheet of plastic material 3 in correspondence with said sealing means 11 and allow the operation to be quicker and easier at the next sealing and transverse cutting station 4. More specifically, the piston 51 forms an area with a reduced thickness in correspondence with said sealing means 11 and it is moved in a reciprocating, synchronized manner with the first operative head 5 of the sealing and transverse cutting station 4. In this way, when the first sealing bar 6 mounted on the first operative head 5 is moved into the working position, it meets with less resistance and the cut in correspondence with said sealing means 11 is sharp and precise.

Advantageously, in the pressing position, the piston 51 is adapted to act on the strips 12, 13 of the sealing means 11 in correspondence with a pressing point, which will be intercepted by the first sealing bar 6 of the sealing and transverse cutting station 4, to create the corresponding transverse sealing strip passing through such pressing point.

Preferably, the end pressing station 25 comprises heating means 47 adapted to heat the piston 51 to speed up the end pressing, and, in particular, seal the strips 12, 13 together in correspondence with the pressing point.

In particular, the heating means 47 comprise a laser source adapted to produce a coherent beam of light, which irradiates the piston 51 and heats up by means of the deposition of optical power carried by the beam of light.

It is also an object of the present invention to achieve a method for producing a protective bag 100, in particular by means of a machine 1 described above, for which the same numerals will be kept for purposes of simplicity.

The method for producing a protective bag 100 initially comprises a step of preparing a sheet of plastic material 3 made of bubble wrap or polyethylene foam. For example, such sheet of plastic material 3 is wrapped around a first rotating drum 2' arranged in correspondence with the preparing station 2 of the machine 1.

The method constituting the object comprises a step of moving the sheet of plastic material 3 along a movement direction X, in which, in particular the sheet of plastic material 3 is unwound from the first rotating drum 2' and advanced along the aforesaid movement direction X towards subsequent stations 9, 25, 4 of the machine 1. In particular, the movement of the strip of plastic material 3 is achieved by movement means of the type known and not described in detail below.

The method constituting the object also comprises a folding step, in which a longitudinal fold 3A is made on the sheet of plastic material 3 parallel to the aforesaid movement direction X. Such longitudinal fold 3A defines two strips 3', 3" overlapping each other and provided with corresponding free edges 7, 7' substantially counterfacing each other, so that each strip 3', 3" extends transversely to the movement direction X, between the longitudinal fold 3A and the corresponding free edge 7, 7'.

In particular, the aforesaid folding step is achieved by folding means (not illustrated in the appended figures) of the type known and consequently not described below, arranged, for example, in correspondence with the preparing station 2 of the machine 1 downstream of the first rotating drum 2'. After the folding step, the method constituting the object preferably includes a positioning step of the sealing means 11 in correspondence with the free edges 7, 7' of the strips 3', 3" of the sheet of plastic material 3 along the movement direction X.

The sealing means 11 comprise a first strip 12 and a second strip 13 arranged parallel to the movement direction X and counterfacing each other.

For example, the strips 12, 13 of the sealing means 11 are wrapped around a second rotating roller 10' arranged in correspondence with the positioning station 10. During the positioning step, the strips 12, 13 are advantageously unwound from the second rotating roller 10' and brought in correspondence with the corresponding strips 3', 3" of the sheet of plastic material 3.

The first strip 12 and the second strip 13 can be joined to each other by means of male-female type shape coupling, in order to allow the bag 100 to be sealed, which will be achieved by means of the method constituting the object.

After the step of positioning the sealing means 11, the method constituting the object comprises a step of longitudinal sealing, wherein the first strip 12 and the second strip 13 of the sealing means 11 are each joined by means of heat sealing, in correspondence with the respective free edge 7, 7' of the strip 3', 3" of the sheet of plastic material 3, by at least one longitudinal sealing strip, parallel to the movement direction X.

Advantageously, the longitudinal sealing strip is continuous so as to guarantee a more secure fastening of the strips 12, 13 to the corresponding strip 3', 3". Alternatively, the longitudinal sealing strip can be made up of several spaced sealing sections.

The longitudinal sealing step is preferably carried out in the longitudinal sealing station 9 of the machine 1, in particular by means of the second operative head 14 and the second sealing bar 15 discussed above.

Advantageously, in the longitudinal sealing step, the first strip 12 and the second strip 13 are each fixed to the corresponding strip 3', 3" of the sheet of plastic material 3 by double heat sealing.

In particular, each strip 12, 13 is fixed to the corresponding strip 3', 3" by means of two longitudinal sealing lines, each made on the corresponding lateral wing 12', 13' of the same strip 12, 13.

After the longitudinal sealing step, the method preferably comprises a compression step, wherein the strips 3', 3" of the folded sheet of plastic material 3 are compressed to each other, reducing the thickness of the folded sheet of plastic material 3, as described below, in detail.

After such compression step, a sealing and transverse cutting step is included, wherein the two compressed strips 3', 3" of the sheet of plastic material 3 are joined to each other by means of heat sealing. This heat sealing forms a transverse sealing strip, which is substantially transverse to the movement direction X and extends from the longitudinal fold 3A to the free edges 7, 7', cutting the sheet of plastic material 3 along the same transverse sealing strip. Such transverse sealing strip forms the corresponding lateral sealing strip 8 of the protective bag 100 to be produced.

Advantageously, the sealing and transverse cutting step is carried out by means of the first operative head 5 and the first sealing bar 6 of the sealing and transverse cutting station 4 of the machine 1. During the sealing and transverse cutting step, the first operative head 5 is moved with reciprocating movement between the working position and the rest position, according to the above.

The aforesaid compression step obtained, in particular, in correspondence with the compression station 48 of the machine 1, presses the strips 3', 3" of the folded sheet of plastic material 3 against each other, reducing the thickness of the latter, so that the two strips 3', 3" are positioned adjacent to each other during the subsequent step of sealing and transverse cutting. This prevents spaces between the strips 3', 3" or their movement, which would result in an incorrect positioning of the latter (for example with creases or misalignments of the free edges 7, 7'), which would prevent the correct sealing and cutting or which would result in defects of the protective bag obtained.

In particular, as the strips 3', 3" are made of bubble wrap or polyethylene foam, they present a relatively large thickness, which favors movements or spacing of the strips 3', 3". The compression step allows a significant reduction in the thickness of the strips 3', 3", consequently allowing the latter to be sealed and cut correctly in the subsequent sealing and transverse cutting step.

Furthermore, by reducing the thickness of the folded sheet of plastic material 3, and in particular by reducing any air between the two strips 3', 3", the compression step substantially reduces the dielectric between the first sealing bar 6 and the corresponding end stroke base 32, favoring the correct sealing of the strips 3', 3".

Advantageously, in the compressing step of the strips 3', 3" of the folded sheet of plastic material 3 they are uniformly compressed against each other, substantially for their whole area between the longitudinal fold line 3A and the respective free edges 7, 7'.

In particular, the compression step is achieved by means of the counter-rotating rollers 49 of the compression device 48' of the compression station 48 of the machine 1, which define a light between them, in which, during the compression step, the sheet of plastic material 3 is forced to pass, compressing the strips 3', 3" between the counter-rotating rollers 49.

In particular, according to the second embodiment of the present invention illustrated in figure 1B, the counter-rotating rollers 49 of the compression station 48 are arranged immediately upstream of the sealing and transverse cutting station 4, so that the strips 3', 3" do not undergo substantial re-expansions or separations in the passage between the counter-rotating rollers 49 and the first sealing bar 6.

Advantageously, the method constituting the object comprises a pressing step of the sealing means 11, between the longitudinal sealing step and the sealing and transverse cutting step, wherein the sheet of plastic material 3 is pressed locally in correspondence with sealing means 11 by pressing the first strip 12 against the second strip 13. In particular, this allows the two strips 12, 13 (fixed to the corresponding strips 3', 3") to substantially adhere to each other, further reducing the thickness of the sheet of plastic material 3 and the possibility of movement or spacing, which could compromise the correct execution of the subsequent step of sealing and transverse cutting.

Advantageously, according to the second embodiment of the present invention illustrated in figure 1B, the pressing step is carried out between the longitudinal sealing step and the compression step.

The compression step is preferably achieved in correspondence with the end compressing station 25 of the machine 1.

Advantageously, the pressing step is achieved by means of the end pressing device 50 (of the end pressing station 25), as discussed previously, provided with the stop wall 52 and the piston 51. During the pressing step, the latter is made to act against the sealing means 11 pressing the first strip 12 and the second strip 13 between the piston 51 and the stop wall 52, with the aim of pressing the first strip 12 and the second strip 13 against each other.

The pressing step preferably comprises the pressing of the first strip 12 against the second strip 12, in particular by means of the end pressing device 50, in a corresponding pressing point, which, in the subsequent sealing and transverse cutting step, is intercepted by the transverse sealing strip, which seals the strips 3', 3" together and cuts the sheet of plastic material 3, forming the corresponding lateral sealing strip 8 of the protective bag 100. In particular, in this way, the sealing and cutting of the sheet of plastic material 3 is guaranteed in correspondence with the thickest point in which the strips 12, 13 are fixed.

Advantageously, the pressing step comprises the sealing of the first strip 12 to the second strip 13 in correspondence with the pressing point, in order to guarantee optimum adhesion in such point.

In particular, during the pressing step, the piston 51 is heated to seal the first strip 12 to the second strip 13 in correspondence with the pressing point.

The piston 51 is preferably heated by radiation, in particular by means of the laser source of the heating means 47.

In particular, the pressing point is brought to a temperature of at least 150 °C, to allow the sealing of the strips 12, 13.

Advantageously, during the pressing step, the piston 51 is moved in a reciprocating manner between the pressing position and the detachment position (discussed above).

In particular, the reciprocating movement of the piston 51 is synchronized with the reciprocating movement of the first operative head 5 of the sealing and transverse cutting station 4, so that the first sealing bar 6 acts (forming the transverse sealing strip) in correspondence with the pressing point on which the piston 51 of the end pressing device 50 has previously acted.

Consequently, the invention thus conceived achieves the predetermined objects.

## Claims

1. A machine (1) for producing a protective bag, which machine (1) comprises:
- a preparing station (2) for a sheet of plastic material (3) made of bubble wrap or polyethylene foam, movable along a movement direction (X) and provided with at least one longitudinal fold (3A) parallel to said movement direction (X), which longitudinal fold (3A) define two overlapping strips (3', 3"), substantially counterfacing each other, each of which is provided with a free edge (7, 7'), so that each strip (3', 3") extends transversely to said movement direction (X) between said longitudinal fold (3A) and the corresponding said free edge (7, 7');
- a sealing and transverse cutting station (4) provided with a first operative head (5) and a first sealing bar (6) fixed to said first operative head (5) and positioned along a transverse direction (Y) substantially orthogonal with respect to said movement direction (X);
said first operative head (5) being movable between:
- a working position, wherein said first sealing bar (6) intercepts said sheet of plastic material (3), joins the strips (3', 3") of said sheet of plastic material (3) by heat sealing, forming a transverse sealing strip substantially aligned with the transverse direction (Y) and cuts said sheet of plastic material (3) along said transverse sealing strip;
- a rest position, wherein said first sealing bar (6) is arranged in a distal position with respect to the sheet of plastic material (3);
- a positioning station (10) interposed between said preparing station (2) and said sealing and transverse cutting station (4), designed to position sealing means (11) in correspondence with the free edges (7, 7') of the strips (3', 3") of the sheet of plastic material (3) along said movement direction (X);
said sealing means (11) comprising a first strip (12) and a second strip (13) positioned counterfacing each other, which can be joined longitudinally by male-female type shape coupling;
- a longitudinal sealing station (9) interposed between said positioning station (10) and said sealing and transverse cutting station (4), provided with a second operative head (14) and at least one second sealing bar (15, 16) fixed to said second operative head (14) substantially parallel to the movement direction (X) of the sheet of plastic material (3);
said second operative head (14) being movable between:
- a sealing position, wherein said second sealing bar (15, 16) intercepts said sheet of plastic material (3) in correspondence with its free edges (7, 7'), joining said first strip (12) and said second strip (13) of said sealing means (11) by heat sealing, each in correspondence with one of the free edges (7, 7') of the strips (3', 3") of said sheet of plastic material (3);
- a separating position, wherein said second sealing bar (15, 16) is arranged in a distal position with respect to the sheet of plastic material (3): and
- a compression station (48), arranged between said longitudinal sealing station (9) and said sealing and transverse cutting station (4) provided with at least one compression device (48') designed to compress the strips (3', 3") of said sheet of plastic material (3) against each other, reducing the thickness of said folded sheet of plastic material (3).

2. A method for producing a protective bag, by means of a machine (1) according to claim 1, said method comprising the following operative steps:
- a step of preparing a sheet of plastic material (3) made of bubble wrap or polyethylene foam;
- a step of moving said sheet of plastic material (3) along a movement direction (X);
- a folding step, wherein at least one longitudinal fold (3A) is made on said sheet of plastic material (3) parallel to said movement direction (X), which longitudinal fold (3A) define two overlapping strips (3', 3") provided with corresponding free edges (7, 7') substantially counterfacing each other, so that each strip (3', 3") extends transversely to said movement direction (X) between said longitudinal fold (3A) and the corresponding said free edge (7, 7');
- a step of positioning sealing means (11) in correspondence with the free edges (7, 7') of the strips (3', 3") of said sheet of plastic material (3) along said movement direction (X); said sealing means (11) comprising a first strip (12) and a second strip (13), which can be joined to each other by means of male-female type shape coupling, which strips (12, 13) in said positioning step are arranged parallel to said movement direction (X) and counterfacing each other;
- a longitudinal sealing step, carried out in said longitudinal sealing station (9) by means of said second operative head (14) and said second sealing bar (15, 16), wherein each said first strip (12) and second strip (13) of said sealing means (11) is joined by heat sealing to said respective strip (3', 3") of said sheet of plastic material (3) in correspondence with said respective free edge (7, 7') by creating at least one longitudinal sealing strip substantially parallel to said movement direction (X);
- a compression step, wherein the strips (3', 3") of said folded sheet of plastic material (3) are compressed against each other reducing the thickness of said folded sheet of plastic material (3);
- a sealing and transverse cutting step, carried out by means of the first operative head (5) and the first sealing bar (6) of said sealing and transverse cutting station (4), after said compression step, during which sealing and transverse cutting step, the two compressed strips (3', 3") of said sheet of plastic material (3) are joined to each other by heat sealing, which heat sealing forms a transverse sealing strip substantially transverse to said movement direction (X) and extending from said longitudinal fold (3A) to said free edges (7, 7'), cutting said sheet of plastic material (3) along said transverse sealing strip (8);
wherein said compression step, obtained in correspondence with said compression station (48), presses the strips (3', 3") of said folded sheet of plastic material (3) against each other, reducing the thickness of said folded sheet of plastic material (3), so that said two strips (3', 3") are positioned adjacent to each other during the subsequent said step of sealing and transverse cutting.

3. The method according to claim 2, wherein said compression step the strips (3', 3") of said folded sheet of plastic material (3) are uniformly compressed against each other between said longitudinal fold line (3A) and said free edges (7, 7').

4. The method according to claim 2 or 3, wherein said compression step is obtained by means of counter-rotating rollers (49), which define a light between them, in which, during said compression step, said folded sheet of plastic material (3) is forced to pass, compressing said strips (3', 3") between said counter-rotating rollers (49).

5. The method according to any one of the preceding claims, comprising a step of compressing said sealing means (11) between said longitudinal sealing step and said sealing and transverse cutting step, wherein said strip of plastic material (3) is pressed locally in correspondence with sealing means (11) pressing said first strip (12) against said second strip (13).

6. The method according to claim 5, wherein said pressing step is obtained by an end pressing device (50) provided with a stop wall (52) and a piston (51), which piston (51) is made to act against said sealing means (11), during said pressing step, pressing said strip (12, 13) between said piston (51) and said stop wall (52).

7. The method according to claim 5 or 6, wherein said pressing step comprises pressing said first strip (12) against said second strip (12) in a corresponding pressing point, which is intercepted by said transverse sealing strip in said subsequent sealing and transverse cutting step.

8. The method according to claim 7, wherein said pressing step comprises sealing said first strip (12) to said second strip (13) in correspondence with said pressing point.

9. The method according to any one of the preceding claims, wherein said sealing and transverse cutting step is executed by means of a first operative head (5) bearing mounted thereto a first sealing bar (6) positioned along a transverse direction (Y) substantially orthogonal to said movement direction (X); during said sealing and transverse cutting step, said first operative head (5) is moved with reciprocating movement between:
- a working position, wherein said first sealing bar (6) intercepts said sheet of plastic material (3), joins the two strips (3', 3") of said sheet of plastic material (3) by heat sealing, forming said transverse sealing strip substantially aligned with the transverse direction (Y), and cuts said sheet of plastic material (3) along said transverse sealing strip;
- a rest position, wherein said first sealing bar (6) is arranged in a distal position with respect to said sheet of plastic material (3).

10. The method according to any one of the claims from 6 to 8 and according to claim 9, wherein in said pressing step, said piston (51) is moved in a reciprocating, synchronized manner with the reciprocating movement of said first operative head (5), between:
- a pressing position, wherein said piston (51) interferes with said sheet of plastic material (3) in correspondence with said sealing means (11) pressing said strips (12, 13) between said piston (51) and said stop wall (52),
- and a detachment position, wherein said piston (51) is arranged in a distal position with respect to the sheet of plastic material (3).

11. The method according to any one of the preceding claims, wherein each said strip (12, 13) comprises a corresponding coupling portion (26, 27) and two corresponding lateral wings (12', 13') made of plastic material, which lateral wings (12', 13') extend from the corresponding said coupling portion (26, 27) in an opposite direction with respect to each other; and wherein in said longitudinal sealing step, each said strip (12, 13) is fixed to the corresponding strip (3', 3") of said sheet of plastic material (3) by double heat sealing, wherein each said strip (12, 13) is fixed to the corresponding said strip (3', 3") by means of two longitudinal sealing lines, each made on the corresponding said lateral wing (12', 13').

## Patentansprüche

1. Maschine (1) zur Herstellung eines Schutzbeutels, wobei diese Maschine (1) Folgendes umfasst:
- eine Vorbereitungsstation (2) für ein aus Luftpolsterfolie oder Polyethylenschaum bestehendes Kunststoffblatt (3), das entlang einer Bewegungsrichtung (X) bewegt werden kann und mit mindestens einem Längsfalz (3A) parallel zu der genannten Bewegungsrichtung (X) versehen ist, wobei dieser Längsfalz (3A) zwei sich im Wesentlichen gegenüberliegende überlappende Streifen (3', 3") definiert, von denen jeder mit einer freien Kante (7, 7') ausgestattet ist, so dass jeder Streifen (3', 3") quer zu der genannten Bewegungsrichtung (X) zwischen dem genannten Längsfalz (3A) und der entsprechenden genannten freien Kante (7, 7') verläuft;
- eine Versiegelungs- und Querschneidstation (4), die mit einem ersten Arbeitskopf (5) und einem an dem genannten ersten Arbeitskopf (5) befestigten ersten Versiegelungsbalken (6), der entlang einer im Verhältnis zu der genannten Bewegungsrichtung (X) im Wesentlichen rechtwinkligen Querrichtung (Y) positioniert ist, ausgestattet ist;
wobei der genannte erste Arbeitskopf (5) bewegt werden kann zwischen:
- einer Arbeitsposition, in der der genannte erste Versiegelungsbalken (6) das genannte Kunststoffblatt (3) erfasst, die Streifen (3', 3") des genannten Kunststoffblatts (3) durch Heißversiegelung verbindet und so einen im Wesentlichen mit der Querrichtung (Y) ausgerichteten Querversiegelungsstreifen bildet und das genannte Kunststoffblatt (3) entlang des genannten Querversiegelungsstreifens schneidet;
- einer Ruheposition, in der der genannte erste Versiegelungsbalken (6) in einer im Verhältnis zu dem Kunststoffblatt (3) distalen Position angeordnet ist;
eine Positionierungsstation (10) zwischen der genannten Vorbereitungsstation (2) und der genannten Versiegelungs- und Querschneidstation (4), die darauf ausgelegt ist, Versiegelungselemente (11) auf den freien Kanten (7, 7') der Streifen (3', 3") des Kunststoffblatts (3) entlang der genannten Bewegungsrichtung (X) zu positionieren; wobei die genannten Versiegelungselemente (11) einen gegenüberliegend positionierten ersten Streifen (12) und zweiten Streifen (13) umfassen, die in Längsrichtung durch eine formschlüssige Feder- und Nutverbindung verbunden werden können;
eine Längsversiegelungsstation (9) zwischen der genannten Positionierungsstation (10) und der genannten Versiegelungs- und Querschneidstation (4), die mit einem zweiten Arbeitskopf (14) und mindestens einem im Wesentlichen parallel zu der Bewegungsrichtung (X) des Kunststoffblatts (3) an dem genannten zweiten Arbeitskopf (14) befestigten zweiten Versiegelungsbalken ausgestattet ist;
wobei der genannte zweite Arbeitskopf (14) bewegt werden kann zwischen:
- einer Versiegelungsposition, in der der genannte zweite Versiegelungsbalken (15, 16) das genannte Kunststoffblatt (3) auf seinen freien Kanten (7, 7') erfasst und den genannten ersten Streifen (12) und den genannten zweiten Streifen (13) der genannten Versiegelungselemente (11) durch Heißversiegelung jeweils auf einer der freien Kanten (7, 7') der Streifen (3', 3") des genannten Kunststoffblatts (3) verbindet;
- einer Trennposition, in der der genannte zweite Versiegelungsbalken (16) in einer im Verhältnis zu dem Kunststoffblatt (3) distalen Position angeordnet ist: und
- eine Komprimierungsstation (48), die zwischen der genannten Längsversiegelungsstation (9) und der genannten Versiegelungs- und Querschneidstation (4) angeordnet und mit mindestens einer Komprimierungsvorrichtung (48') ausgestattet ist, die darauf ausgelegt ist, die Streifen (3', 3") des genannten Kunststoffblatts (3) miteinander zu komprimieren und so die Stärke des genannten gefalzten Kunststoffblatts (3) zu verringern.

2. Verfahren zur Herstellung eines Schutzbeutels mittels einer Maschine (1) nach Anspruch 1, wobei das genannte Verfahren die folgenden Arbeitsschritte umfasst:
- einen Schritt der Vorbereitung eines Kunststoffblatts (3) aus Luftpolsterfolie oder Polyethylenschaum;
- einen Schritt des Bewegens des genannten Kunststoffblatts (3) entlang einer Bewegungsrichtung (X);
- einen Falzschritt, bei dem mindestens ein Längsfalz (3A) auf dem genannten Kunststoffblatt (3) parallel zu der genannten Bewegungsrichtung (X) angebracht wird, wobei dieser Längsfalz (3A) zwei überlappende Streifen (3', 3") mit entsprechenden im Wesentlichen gegenüberliegenden freien Kanten (7, 7') definiert, so dass jeder Streifen (3', 3") quer zu der genannten Bewegungsrichtung (X) zwischen einem Längsfalz (3A) und der entsprechenden freien Kante (7, 7') verläuft;
- einen Schritt des Positionierens von Versiegelungselementen (11) auf den freien Kanten (7, 7') der Streifen (3', 3") des genannten Kunststoffblatts (3) entlang der genannten Bewegungsrichtung (X); wobei die genannten Versiegelungselemente (11) einen ersten Streifen (12) und einen zweiten Streifen (13) umfassen, die miteinander mittels einer formschlüssigen Feder-Nut-Verbindung verbunden werden können, wobei diese Streifen (12, 13) bei dem genannten Positionierungsschritt parallel zu der genannten Bewegungsrichtung (X) angeordnet sind und sich gegenüberliegen;
- einen Längsversiegelungsschritt, der in der genannten Längsversiegelungsstation (9) mittels des genannten zweiten Arbeitskopf (14) und des genannten zweiten Versiegelungsbalkens (15, 16) ausgeführt wird, bei dem jeder genannte erste Streifen (12) und zweite Streifen (13) des genannten Versiegelungselements (11) durch Heißversiegelung mit dem genannten entsprechenden Streifen (3', 3") des genannten Kunststoffblatts (3) auf der genannten entsprechenden freien Kante (7, 7') verbunden wird, indem mindestens ein im Wesentlichen zu der genannten Bewegungsrichtung (X) paralleler Längsversiegelungsstreifen gebildet wird;
- einen Kompressionsschritt, bei dem die Streifen (3', 3") des genannten gefalzten Kunststoffblatts (3) gegeneinander gedrückt werden und so die Stärke des genannten gefalzten Kunststoffblatts (3) verringern;
- einen Versiegelungs- und Querschneidschritt, der mit Hilfe des ersten Arbeitskopfes (5) und des ersten Versiegelungsbalkens (6) der genannten Versiegelungs- und Querschneidstation (4) nach dem genannten Komprimierungsschritt ausgeführt wird, wobei bei diesem Versiegelungs- und Querschneidschritt die beiden komprimierten Streifen (3', 3") des genannten Kunststoffblatts (3) miteinander durch Heißversiegelung verbunden werden, wobei diese Heißversiegelung einen im Wesentlichen zu der genannten Bewegungsrichtung (X) quer und von dem genannten Längsfalz (3A) zu den genannten freien Kanten (7, 7') verlaufenden Querversiegelungsstreifen bildet und das genannte Kunststoffblatt (3) entlang dem genannten Querversiegelungsstreifen (8) geschnitten wird;
wobei der genannte Kompressionsschritt, der auf der genannten Kompressionsstation (48) erzielt wird, die Streifen (3', 3") des genannten gefalzten Kunststoffblatts (3) miteinander komprimiert und so die Stärke des genannten gefalzten Kunststoffblatts (3) verringert, so dass die genannten beiden Streifen (3', 3") während des nachfolgenden Versiegelungs- und Querschneidschritts aneinander angrenzend positioniert sind.

3. Verfahren nach Anspruch 2, bei dem bei dem genannten Kompressionsschritt die Streifen (3' 3") des genannten gefalzten Kunststoffblatts (3) zwischen der genannten Längsfalzlinie (3A) und den genannten freien Kanten (7, 7') miteinander komprimiert werden.

4. Verfahren nach Anspruch 2 oder 3, bei dem der genannte Kompressionsschritt mit Hilfe von gegenläufigen Rollen (49) erzielt wird, die einen Spalt zwischen sich definieren, den das genannte gefalzte Kunststoffblatt (3) während des genannten Kompressionsschritts zwangsweise durchläuft und so die genannten Streifen (3', 3") zwischen den genannten gegenläufigen Rollen (49) komprimiert.

5. Verfahren nach einem beliebigen der vorangegangenen Ansprüche, umfassend einen Schritt des Komprimierens der genannten Versiegelungselemente (11) zwischen dem genannten Längsversiegelungsschritt und dem genannten Versiegelungs- und Querschneidschritt, bei dem der genannte Kunststoffstreifen (3) lokal auf den Versiegelungselementen (11) zusammengedrückt wird und so den genannten ersten Streifen (12) gegen den genannten zweiten Streifen (13) drückt.

6. Verfahren nach Anspruch 5, bei dem der genannte Druckschritt mittels einer Enddruckvorrichtung (50) erzielt wird, die mit einer Stoppwand (52) und einem Kolben (51) ausgestattet ist, wobei der Kolben (51) dazu dient, während des genannten Druckschritts gegen das genannte Versiegelungselement (11) zu wirken und so den genannten Streifen (12, 13) zwischen dem genannten Kolben (51) und der genannten Stoppwand (52) zusammenzudrücken.

7. Verfahren nach Anspruch 5 oder 6, bei dem der genannte Druckschritt das Drücken des genannten ersten Streifens (12) gegen den genannten zweiten Streifen (12) an einem Druckpunkt umfasst, der von dem genannten Querversiegelungsstreifen bei dem genannten nachfolgenden Versiegelungs- und Querschneidschritt erfasst wird.

8. Verfahren nach Anspruch 7, bei dem der genannte Druckschritt das Versiegeln des genannten ersten Streifens (12) mit dem genannten zweiten Streifen (13) auf dem genannten Druckpunkt umfasst.

9. Verfahren nach einem beliebigen der vorangegangenen Ansprüche, bei dem der genannte Versiegelungs- und Querschneidschritt mittels eines ersten, entlang einer im Wesentlichen zu der genannten Bewegungsrichtung (X) rechtwinkligen Querrichtung (Y) positionierten Arbeitskopfes (5) ausgeführt wird, auf dem ein erster Versiegelungsbalken (6) gelagert montiert ist; wobei während des genannten Versiegelungs- und Querschneidschritt der erste Arbeitskopf (5) hin- und hergehend bewegt wird zwischen:
- einer Arbeitsposition, in der der genannte erste Versiegelungsbalken (6) das genannte Kunststoffblatt (3) erfasst, die beiden Streifen (3', 3") des genannten Kunststoffblatts (3) durch Heißversiegelung verbindet und so den genannten im Wesentlichen mit der Querrichtung (Y) ausgerichteten Querversiegelungsstreifen bildet und das genannte Kunststoffblatt (3) entlang des genannten Querversiegelungsstreifens schneidet;
- einer Ruheposition, in der der genannte erste Versiegelungsbalken (6) in einer im Verhältnis zu dem Kunststoffblatt (3) distalen Position angeordnet ist.

10. Verfahren nach einem beliebigen der Ansprüche 6 bis 8 und nach Anspruch 9, bei dem bei dem genannten Druckschritt der genannte Kolben (51) auf hin- und herbewegende, synchronisierte Weise mit der Hin- und Herbewegung des genannten ersten Kopfs (5) bewegt wird zwischen:
- einer Druckposition, in der der genannte Kolben (51) auf das genannte Kunststoffblatt (3) auf den genannten Versiegelungselementen (11) wirkt und die genannten Streifen (12, 13) zwischen dem genannten Kolben (51) und der genannten Stoppwand (52) zusammendrückt,
- und einer Abstandsposition, in der der genannte Kolben (51) in einer im Verhältnis zu dem Kunststoffblatt (3) distalen Position angeordnet ist.

11. Verfahren nach einem beliebigen der vorangegangenen Ansprüche, bei dem jeder genannte Streifen (12, 13) einen entsprechenden Verbindungsabschnitt (26, 27) und zwei entsprechende seitliche Lamellen (12', 12') aus Kunststoff umfasst, wobei die seitlichen Lamellen (12', 13') von dem entsprechenden genannten Verbindungsabschnitt (26, 27) in einer im Verhältnis zueinander entgegengesetzten Richtung verlaufen; und bei dem bei dem genannten Längsversiegelungsschritt jeder genannte Streifen (12, 13) an dem entsprechenden Streifen (3', 3") des genannten Kunststoffblatts (3) durch doppelte Heißversiegelung befestigt wird, wobei jeder genannte Streifen (12, 13) an dem entsprechenden genannten Streifen (3', 3") mittels zwei Längsversiegelungslinien befestigt wird, die jeweils auf der entsprechenden genannten seitlichen Lamelle (12', 13') angebracht sind.

## Revendications

1. Machine (1) de production d'un sac de protection, la machine (1) comprenant :
- une station de préparation (2) pour une feuille de matière plastique (3) constituée d'un film à bulles ou de mousse de polyéthylène, mobile le long d'une direction de mouvement (X) et munie d'au moins un pli longitudinal (3A) parallèle à ladite direction de mouvement (X), le pli longitudinal (3A) définissant deux bandes de chevauchement (3', 3"), étant sensiblement l'une en face de l'autre, chacune desquelles est munie d'un bord libre (7, 7'), de sorte que chaque bande (3', 3") s'étende transversalement à ladite direction de mouvement (X) entre ledit pli longitudinal (3A) et ledit bord libre (7, 7') correspondant ;
- une station de soudage et de coupe transversale (4) munie d'une première tête opérationnelle (5) et d'une première barre de soudage (6) fixée à ladite première tête opérationnelle (5) et positionnée le long d'une direction transversale (Y) sensiblement orthogonale à ladite direction de mouvement (X) ;
ladite première tête opérationnelle (5) étant mobile entre :
- une position de travail, dans laquelle ladite première barre de soudage (6) intercepte ladite feuille de matière plastique (3), unit les bandes (3', 3") de ladite feuille de matière plastique (3) par thermosoudage, en formant une bande de soudage transversal sensiblement alignée avec la direction transversale (Y) et coupe ladite feuille de matière plastique (3) le long de ladite bande de soudage transversal ;
- une position de repos, dans laquelle ladite première barre de soudage (6) est disposée dans une position distale par rapport à la feuille de matière plastique (3) ;
- une station de positionnement (10) interposée entre ladite station de préparation (2) et ladite station de soudage et de coupe transversale (4), conçue pour positionner des moyens de soudage (11) en correspondance avec les bords libres (7, 7') des bandes (3', 3") de la feuille de matière plastique (3) le long de ladite direction de mouvement (X) ; lesdits moyens de soudage (11) comprenant une première bande (12) et une deuxième bande (13) positionnées l'une en face de l'autre, qui peuvent être unies de manière longitudinale au moyen d'un couplage de forme de type mâle-femelle ;
- une station de soudage longitudinal (9) interposée entre ladite station de positionnement (10) et ladite station de soudage et de coupe transversale (4), munie d'une deuxième tête opérationnelle (14) et au moins d'une deuxième barre de soudage (15, 16) fixée à ladite deuxième tête opérationnelle (14) sensiblement parallèle à la direction de mouvement (X) de la feuille de matière plastique (3) ;
ladite deuxième tête opérationnelle (14) étant mobile entre :
- une position de soudage, dans laquelle ladite deuxième barre de soudage (15, 16) intercepte ladite feuille de matière plastique (3) en correspondance avec ses bords libres (7, 7'), en unissant ladite première bande (12) et ladite deuxième bande (13) desdits moyens de soudage (11) par thermosoudage, chacune en correspondance avec un des bords libres (7, 7') des bandes (3', 3") de ladite feuille de matière plastique (3) ;
- une position de séparation, dans laquelle ladite deuxième barre de soudage (15, 16) est disposée dans une position distale par rapport à la feuille de matière plastique (3) ;
et
- une station de compression (48), disposée entre ladite station de soudage longitudinal (9) et ladite station de soudage et de coupe transversale (4), munie d'au moins un dispositif de compression (48') conçu pour comprimer les bandes (3', 3") de ladite feuille de matière plastique (3) l'une contre l'autre, en réduisant l'épaisseur de ladite feuille pliée de matière plastique (3).

2. Procédé de production d'un sac de protection, au moyen d'une machine (1) selon la revendication 1, ledit procédé comprenant les étapes opérationnelles suivantes :
- une étape de préparation d'une feuille de matière plastique (3) constituée d'un film à bulles ou de mousse de polyéthylène ;
- une étape de mouvement de ladite feuille de matière plastique (3) le long d'une direction de mouvement (X) ;
- une étape de pliage, dans laquelle au moins un pli longitudinal (3A) est réalisé sur ladite feuille de matière plastique (3) parallèle à ladite direction de mouvement (X), le pli longitudinal (3A) définissant deux bandes de chevauchement (3', 3") munies de bords libres (7, 7') correspondants, étant sensiblement l'une en face de l'autre, de sorte que chaque bande (3', 3") s'étende transversalement à ladite direction de mouvement (X) entre ledit pli longitudinal (3A) et ledit bord libre (7, 7') correspondant ;
- une étape de positionnement des moyens de soudage (11) en correspondance avec les bords libres (7, 7') des bandes (3', 3") de ladite feuille de matière plastique (3) le long de ladite direction de mouvement (X) ; lesdits moyens de soudage (11) comprenant une première bande (12) et une deuxième bande (13), qui peuvent être unies l'une à l'autre au moyen d'un couplage de forme de type mâle-femelle, lesquelles (12, 13) dans ladite étape de positionnement sont disposées parallèles à ladite direction de mouvement (X) et l'une en face de l'autre ;
- une étape de soudage longitudinal, effectuée dans ladite station de soudage longitudinal (9) au moyen de ladite deuxième tête opérationnelle (14) et ladite deuxième barre de soudage (15, 16), dans laquelle chacune desdites première bande (12) et deuxième bande (13) desdits moyens de soudage (11) est unie par thermosoudage à ladite bande (3', 3") respective de ladite feuille de matière plastique (3) en correspondance avec ledit bord libre (7, 7') respectif en formant au moins une bande de soudage longitudinal sensiblement parallèle à ladite direction de mouvement (X) ;
- une étape de compression, dans laquelle les bandes (3', 3") de ladite feuille pliée de matière plastique (3) sont comprimées l'une contre l'autre en réduisant l'épaisseur de ladite feuille pliée de matière plastique (3) ;
- une étape de soudage et de coupe transversale, effectuée au moyen de la première tête opérationnelle (5) et de la première barre de soudage (6) de ladite station de soudage et de coupe transversale (4), après ladite étape de compression, étape de soudage et de coupe transversale pendant laquelle les deux bandes comprimées (3', 3") de ladite feuille de matière plastique (3) sont unies l'une à l'autre par thermosoudage, qui forme une bande de soudage transversal sensiblement transversale à ladite direction de mouvement (X) et s'étendant dudit pli longitudinal (3A) auxdits bords libres (7, 7'), en coupant ladite feuille de matière plastique (3) le long de ladite bande de soudage transversal (8) ;
dans lequel ladite étape de compression, obtenue en correspondance avec ladite station de compression (48), presse les bandes (3', 3") de ladite feuille pliée de matière plastique (3) l'une contre l'autre, en réduisant l'épaisseur de ladite feuille pliée de matière plastique (3), de sorte que lesdites deux bandes (3', 3") soient positionnées adjacentes l'une à l'autre pendant ladite étape successive de soudage et coupe transversale.

3. Procédé selon la revendication 2, dans lequel, dans ladite étape de compression, les bandes (3', 3") de ladite feuille pliée de matière plastique (3) sont comprimées de manière uniforme l'une contre l'autre entre ladite ligne de pli longitudinal (3A) et lesdits bords libres (7, 7').

4. Procédé selon la revendication 2 ou 3, dans lequel ladite étape de compression est obtenue au moyen de rouleaux contrarotatifs (49), qui définissent une lumière entre eux, dans laquelle, pendant ladite étape de compression, on force ladite feuille pliée de matière plastique (3) à y passer, comprimant lesdites bandes (3', 3") entre lesdits rouleaux contrarotatifs (49).

5. Procédé selon l'une quelconque des revendications précédentes, comprenant une étape consistant à comprimer lesdits moyens de soudage (11) entre ladite étape de soudage longitudinal et ladite étape de soudage et de coupe transversale, dans laquelle ladite bande de matière plastique (3) est pressée localement en correspondance avec lesdits moyens de soudage (11) en pressant ladite première bande (12) contre ladite deuxième bande (13).

6. Procédé selon la revendication 5, dans lequel ladite étape de pressage est obtenue par un dispositif de pressage final (50) muni d'une paroi d'arrêt (52) et d'un piston (51), ce dernier (51) étant réalisé pour agir contre lesdits moyens de soudage (11), pendant ladite étape de pressage, en pressant ladite bande (12, 13) entre ledit piston (51) et ladite paroi d'arrêt (52).

7. Procédé selon la revendication 5 ou 6, dans lequel ladite étape de pressage comprend le pressage de ladite première bande (12) contre ladite deuxième bande (12) sur un point de pressage correspondant, qui est intercepté par ladite bande de soudage transversal dans ladite étape de soudage et de coupe transversale successive.

8. Procédé selon la revendication 7, dans lequel ladite étape de pressage comprend le soudage de ladite première bande (12) à ladite deuxième bande (13) en correspondance avec ledit point de pressage.

9. Procédé selon l'une quelconque des revendications précédentes, dans lequel ladite étape de soudage et de coupe transversale est exécutée au moyen d'une première tête opérationnelle (5) sur laquelle est montée une première barre de soudage (6) positionnée le long d'une direction transversale (Y) sensiblement orthogonale à ladite direction de mouvement (X) ; pendant ladite étape de soudage et de coupe transversale, ladite première tête opérationnelle (5) est déplacée suivant un mouvement alternatif entre :
- une position de travail, dans laquelle la première barre de soudage (6) intercepte ladite feuille de matière plastique (3), unit les deux bandes (3', 3") de ladite feuille de matière plastique (3) par thermosoudage, en formant ladite bande de soudage transversal sensiblement alignée avec la direction transversale (Y), et coupe ladite feuille de matière plastique (3) le long de ladite bande de soudage transversal ;
- une position de repos, dans laquelle ladite première barre de soudage (6) est disposée dans une position distale par rapport à ladite feuille de matière plastique (3).

10. Procédé selon l'une quelconque des revendications 6 à 8 et selon la revendication 9, dans lequel, dans ladite étape de pressage, ledit piston (51) est déplacé de façon alternative et synchronisée avec le mouvement alternatif de ladite première tête opérationnelle (5), entre :
- une position de pressage, dans laquelle ledit piston (51) interfère avec ladite feuille de matière plastique (3) en correspondance avec lesdits moyens de soudage (11) en pressant lesdites bandes (12, 13) entre ledit piston (51) et ladite paroi d'arrêt (52),
- et une position de détachement, dans laquelle ledit piston (51) est disposé dans une position distale par rapport à la feuille de matière plastique (3).

11. Procédé selon l'une quelconque des revendications précédentes, dans lequel chacune desdites bandes (12, 13) comprend une partie de couplage (26, 27) correspondante et deux ailes latérales (12', 13') correspondantes réalisées en matière plastique, lesdites ailes latérales (12', 13') s'étendant de ladite partie de couplage (26, 27) correspondante dans une direction opposée l'une par rapport à l'autre ; et dans lequel, dans ladite étape de soudage longitudinal, chaque bande (12, 13) est fixée à la bande (3', 3") correspondante de ladite feuille de matière plastique (3) par double thermosoudage, dans lequel chacune desdites bandes (12, 13) est fixée à ladite bande (3', 3") correspondante au moyen de deux lignes de soudage longitudinal, chacune réalisée sur ladite aile latérale (12', 13') correspondante.
